# EUROPEAN PATENT SPECIFICATION

(11) **EP 2 273 241 B1**
(45) Date of publication and mention of the grant of the patent: **31.12.2014**
(21) Application number: 09722106.3
(22) Date of filing: 30.01.2009
(51) Int. Cl.: G01G 15/00, G01G 17/00, G01G 23/00

(54) **EQUIPMENT FOR WEIGHING FILLED AMOUNT**
GERÄTE ZUM WÄGEN DER FÜLLMENGE
ÉQUIPEMENT POUR PESER UNE QUANTITÉ REMPLIE

(30) Priority: 19.03.2008 WO PCT/JP2008/055059
(43) Date of publication of application: 12.01.2011
(73) Proprietor: Morimoto-Pharma Co., Ltd., Suita-shi, Osaka 565-0843 (JP); Unitec Co., Ltd., Osaka-shi, Osaka 554-0052 (JP); Pharma-Tech Co., Ltd., Suita-shi, Osaka 565-0821 (JP)
(72) Inventor: MORIMOTO, Shuji, Suita-shi Osaka 565-0843 (JP); WADA, Yasutaro, Suita-shi Osaka 565-0821 (JP)
(74) Representative: Fleuchaus, Michael A.
(86) International application number: PCT/JP2009/051558
(87) International publication number: WO 2009/116325

(56) References cited:
- EP-A2- 0 408 822
- WO-A1-96/05485
- WO-A1-03/027617
- JP-A- 2001 322 602
- JP-A- 2004 182 274
- JP-B- 7 065 923
- JP-B- 8 001 394
- JP-B2- 2 612 905
- JP-B2- 3 461 595
- JP-B2- 3 643 142
- JP-B2- 3 678 741

## Description

### TECHNICAL FIELD

The present invention relates to a filled amount weighing apparatus for filling a predetermined amount of powder or solution, which is a pharmaceutical product or the like, into a container such as a vial and for automatically and properly weighing a filled amount and more specifically relates to a filled amount weighing apparatus in which container carrying times between respective stages can be shortened, processing times at weighing stages can be shortened, weighing can be carried out easily and accurately, the entire weighing operation can be sped up, and productivity can be increased.

### BACKGROUND ART

In general, in a process for filling various kinds of objects to be filled such as powder, granular substances, solutions, and thick fluent materials into various containers, a filled amount is checked by sampling the containers from a line with suitable frequency, weighing an empty container before the filling and the container after the filling, respectively, and calculating the filled amount. By this sampling method, however, it is impossible to find an irregularity when it is caused in the filled amount by some sporadic event. Extremely high accuracy of the filled amount is required and not a single improperly filled item is allowed especially in pharmaceutical products, such requirements cannot be satisfied by such sampling weighing.

To solve this problem, a filled amount weighing apparatus for weighing the filled amount in an every container filled with the object to be filled has been proposed conventionally (see Patent Document 1, for example).

This prior-art filled amount weighing apparatus includes a carrying-in stage for accepting an empty container, a pre-weighing stage for weighing the empty container by means of a first electronic balance, a filling stage for filling the object to be filled and sent out of a filling device into this empty container, a post-weighing stage for weighing the filled container by means of a second electronic balance, and a carrying-out stage for sending the filled container out to a next process in this order along a carrying path.

For example, the empty containers formed of vials or the like are successively fed from a carrying-in conveyer to the carrying-in stage. Next, the empty container at the carrying-in stage is carried to the pre-weighing stage and weighed by the first electronic balance. Then, the weighed empty container is carried to the filling stage where the filling device fills the object to be filled such as powder into the container. After that, the filled container at this filling stage is carried to the post-weighing stage and weighed by the second electronic balance. Then, the filled container weighed at this post-weighing stage is carried to the carrying-out stage from which it is sent out to the next process.

The above-described respective stages are arranged in series and at predetermined intervals on the same base and a container carrying device having a long actuation bar mounted with four chucks is disposed at a side portion of this base. This actuation bar is formed to be moved in directions X, Y, and Z by a driving mechanism and each chuck grasps one container and moves along the same locus. In this way, it is possible to move four containers at once from the feed conveyer to the first electronic balance, from the first electronic balance to the filling device, from the filling device to the second electronic balance, and from the second electronic balance to a carrying-out device. By weighing the empty containers and the filled containers before and after the filling of the containers, filled amounts of all the containers are weighed.

In the above-described apparatus, the filled amount by the filling device which varies with time is adjusted to a target value based on weighing values of the first electronic balance and the second electronic balance and, in this way, defective items are considerably reduced and yield is improved. Moreover, because all the containers can be weighed by disposing the electronic balances on front and rear sides of the filling device and weighing the empty container and weighing the filled container by the front and rear electronic balances, respectively, while filling the object to be filled into another container in the above-described apparatus, the device has an advantage that it can detect an irregularity caused in the filled amount by some sporadic reason to reliably reject defective items to achieve guarantee of the filled amounts of all the products.

Patent Document 1: Japanese Patent Laid-open Publication No. 03-054418

Further prior art documents are EP 0 408 822 A2, WO 96/05485 A1 and WO 03/027617 A1.

### DISCLOSURE OF THE INVENTION

### PROBLEMS TO BE SOLVED BY THE INVENTION

In the above-described prior art, the moving bar having the four chucks moves the respective containers to the next stages. Operations of the each chuck at this time include eight operations, i.e., moving ahead to a predetermined stage, grasping a container, lifting the container, moving horizontally to a position above the next stage, lowering the container, releasing the container, moving back, and returning to an initial standby position. Moreover, the container needs to be placed on the electronic balance while giving the smallest possible impact to the balance and therefore it is impossible to excessively speed up the movement of the container. As a result, it takes about six to eight seconds to carry each container to the next stage and it is not easy to speed up the entire weighing process of the filled amount.

The container made of glass or synthetic resin easily builds up static electricity and a powdered pharmaceutical product or the like is filled into the container in a dry atmosphere, which creates an environment in which static electricity is produced easily. If the container on the electric balance is electrostatically charged, Coulomb force is produced between the container and other objects around it and they attract each other, which inhibits accurate weighing.

Furthermore, filling of a pharmaceutical product, for example, is normally carried out in a clean room, where a one-way airflow from top to down, i.e., what is called a laminar flow, is formed in some cases to keep a room interior clean. If the container on the above-described electronic balance is affected by this airflow or other room-interior winds, weighing of the container becomes inaccurate.

Therefore, in the above-described prior art, after the container is placed on the electronic balance, a metal cap is lowered from above to cover the container and the container is weighed while protected from effects of the static electricity and the room-interior winds at each of the weighing stages.

However, the cap recedes to a higher position than a moving path of the carrying by the chuck so as not to interfere with the carrying of the container. Therefore, the cap needs to move down a longer distance than height of the container in order to cover a periphery of the container placed on the electronic balance and needs to move up this distance after the weighing. Because the metal cap takes time to move up and down, it is not easy to shorten the processing time at each of the weighing stages and it is much less easy to speed up the entire weighing process of the filled amount.

It is a technical object of the present invention to provide a filled amount weighing apparatus in which these problems are solved, container carrying times between respective stages are shortened, processing times at weighing stages are shortened, weighing can be carried out easily and accurately, the entire weighing operation can be sped up, and productivity can be increased.

### MEANS FOR SOLVING THE PROBLEMS

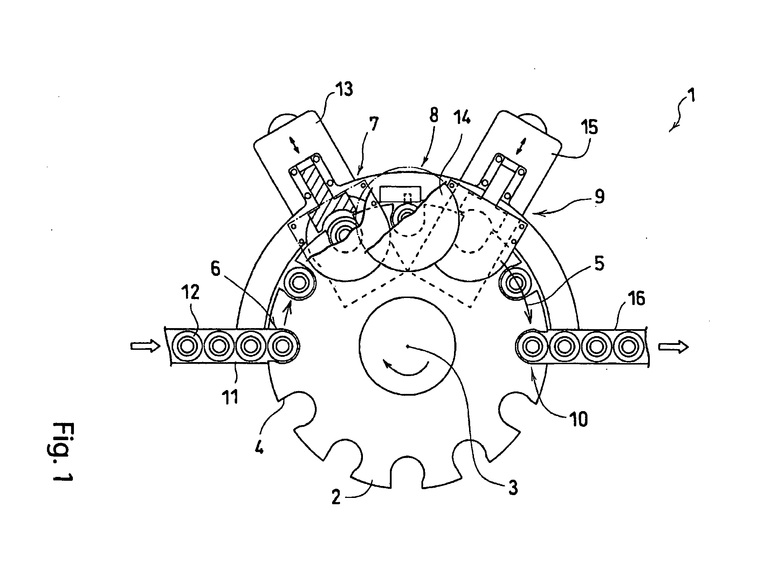

To achieve the above object, the present invention is formed as follows as described based on Figs. 1 to 19 showing embodiments of the present invention, for example. In other words, the present invention relates to a filled amount weighing apparatus including, in the following order along a carrying path (5): a carrying-in stage (6) for receiving an empty container (12), a pre-weighing stage (7) for weighing the empty container (12), a filling stage (8) for filling an object (34) to be filled and sent out of a filling device (14) into the weighed empty container (12), a post-weighing stage (9) for weighing the filled container (12), and a carrying-out stage (10) for sending the weighed and filled container (12) out to a next process, wherein carrying means (2) having a container housing portion (4) is provided, the empty container (12) is housed into the container housing portion (4) at the carrying-in stage (6), the container housing portion (4) moves along the carrying path (5) with the container (12) housed in the container housing portion (4), the filled container (12) is taken out of the container housing portion (4) at the carrying-out stage (10), the carrying means (2) moves intermittently so that the container housing portion (4) temporarily stops at the respective stages (6, 7, 8, 9, and 10), and the container (12) is carried from the carrying-in stage (6) to the carrying-out stage (10) with a cylinder body (19) made of electrically conductive material fitted over the container (12).

The empty container supplied to the carrying-in stage is housed in the container housing portion provided to the carrying means. When the carrying means moves intermittently, the containers housed in the container housing portions are successively carried to the respective stages to reach the carrying-out stage. During this time, the empty container is weighed at the pre-weighing stage, a predetermined amount of object to be filled is filled into the container by a filling device at the filling stage, and the filled container is weighed at the post-weighing stage. The weighed and filled container is carried to the carrying-out stage by the intermittent movement of the carrying means and sent out of the carrying-out stage to the next process. On the other hand, the container housing portion returns to the carrying-in stage as the carrying means moves further.

Because the cylinder body made of the electrically conductive material is fitted over the container, effects of static electricity are prevented at the time of weighing. Moreover, because the container is carried from the carrying-in stage to the carrying-out stage with the cylinder body fitted over the container, operations for attaching and removing the cylinder body at the respective weighing stages become unnecessary, which substantially shortens the processing times at the weighing stages.

The container is held in the cylinder body and maintained in an attitude with an opening for filling oriented upward. Therefore, even if the container is in such a shape that it falls down easily or cannot stand for itself, the object to be filled is reliably filled at the filling stage and the filled container is easily carried to the carrying-out stage.

The cylinder body made of the electrically conductive material may be fitted over the empty container in advance before the container is carried into the carrying-in stage and the filled container may be taken out of the cylinder body after the container is sent out of the carrying-out stage. In this case, the insertion stage for inserting the empty container into the cylinder body may be provided in the vicinity of the carrying-in stage, the taking-out stage for taking the filled container out of the cylinder body may be provided in the vicinity of the carrying-out stage, the cylinder body retrieving path may be formed between the taking-out stage and the insertion stage, and the cylinder body may be circulated from the taking-out stage to the insertion stage through the cylinder body retrieving path.

The cylinder body made of the electrically conductive material may be provided to the container housing portion. In this case, the empty container is inserted into the cylinder body at the carrying-in stage and the filled container is taken out of the cylinder body at the carrying-out stage.

The carrying means is not restricted to a specific shape. However, it is preferable if the container housing portion is provided with a windshield member for covering a part of a periphery of the container and a container doorway formed at a remaining part of the periphery of the container and the pre-weighing stage and the post-weighing stage are provided with auxiliary windshield members for covering the container doorway to close the doorway, because the container can be easily put into and taken out through the container doorway at the carrying-in stage and the carrying-out stage while it is possible to cover the periphery of the container with the auxiliary windshield member and the windshield member by only closing the container doorway with the auxiliary windshield member at the weighing stage to thereby prevent effects of room-interior winds such as a laminar flow at the time of weighing to easily and accurately carry out weighing.

It is essential only that the auxiliary windshield member be provided to each of the weighing stages. It is preferable if at least a part of the auxiliary windshield member is formed to move forward and backward with respect to the container housing portion to open and close the container doorway, because the periphery of the container can be covered without a clearance. In this case, the auxiliary member only has to close the doorway open in the container housing portion and to move an extremely short distance. On the other hand, it is preferable if the auxiliary windshield member is fixed closely to or in contact with the container housing portion that has moved to the weighing stage, because the auxiliary windshield member can be formed easily by omitting a driving mechanism and does not cause vibration due to its movement to thereby enable swift and accurate measurement. It is preferable if at least parts of the windshield member and the auxiliary windshield member are made of the electrically conductive material, because the effects of the winds and the effect of the static electricity can be prevented.

The above container may be carried while supported by an inner peripheral face of the container housing portion and a support plate provided along the carrying path and below the carrying means, for example. In this case, it is possible to easily carry the container while sliding it on the support plate.

However, the container housing portion may be provided with pinching means, the container housed in the container housing portion may be carried while pinched by the pinching means, and the pinching means may release its pinch on the container at least at the pre-weighing stage and the post-weighing stage. In this case, though the support plate may be used as well, it is possible to omit the support plate and the container can be reliably carried. Moreover, because the container housing portion is provided with the pinching means, it is advantageously possible to easily weigh the container by only releasing the pinch at the weighing stages.

If the cylinder body is housed in the container housing portion, the cylinder body may be carried while pinched by the pinching means provided to the container housing portion and the pinching means may be formed to release its pinch on the cylinder body at least at the pre-weighing stage and the post-weighing stage. In this case, though the support plate can be used as well, it is possible to omit the support plate and the container can be reliably carried. Moreover, because the container housing portion is provided with the pinching means, it is advantageously possible to easily weigh the container by only releasing the pinch at the weighing stages.

The carrying path from the carrying-in stage to the carrying-out stage only has to smoothly carry the container and is not restricted to a specific shape. For example, the carrying path may be disposed along a circumference about a vertical shaft center and the carrying means may be rotated horizontally about the shaft center. In this case, it is advantageously possible to easily move the container housing portion along the carrying path by only rotating the carrying means.

The carrying path from the carrying-in stage to the carrying-out stage may be disposed linearly and the carrying means may be moved along the carrying path.

The number of each of the pre-weighing stage, the filling stage, and the post-weighing stage provided along the carrying path may be one. However, it is preferable if a plurality of and the same number of pre-weighing stages, the filling stages, and the post-weighing stages are provided, because the one filled amount weighing apparatus can fill several-fold more containers to further increase productivity. In this case, it is preferable if the carrying path is disposed linearly, because the plurality of weighing devices and the filling devices can be disposed easily.

The pre-weighing stage, the filling stage, and the post-weighing stage may be disposed at a filling and weighing stage in the same position and the filling and weighing stage may be provided with the weighing means and the filling device. In this case, only one weighing means is required and the respective stages can share the position for disposition, which advantageously makes the entire apparatus compact.

An inspection stage may be provided and defective item rejecting means may be disposed between the post-weighing stage and the carrying-out stage and the defective item rejecting means may eject the filled container from the carrying path when a filled amount calculated from weighing values of the first weighing means and the second weighing means is out of a predetermined control range. In this case, an improperly filled item can be ejected from a line immediately after the filling of the object to be filled into the container and a sporadic event that has caused the irregularity in the filled amount can be swiftly dealt with, which advantageously reduces defective items.

The filling device is not restricted to a specific filling device. For example, it is preferable if what is called an auger powder filling device having an auger screw and filling the object to be filled into the empty container by means of rotation of the auger screw is used, because a rotation amount of the auger screw can be controlled accurately and there is a satisfactory proportional relationship between the rotation amount and the filled amount, which makes it possible to accurately correct the filled amount by feeding back the value calculated by the weighing.

### EFFECTS OF THE INVENTION

Because the present invention is formed and operates as described above, it has the following effects.

(1) The carrying means only has to move intermittently to carry the container positioned at each stage to the next stage and does not have to carry out many complicated operations unlike the prior art. As a result, the carrying means can carry each container to the next stage in an extremely short time, e.g., 1 to 2 seconds, substantially shortening the container carrying times between the respective stages. Therefore, the entire weighing process of the filled amount can be easily sped up and the productivity can be increased.
(2) Because the cylinder body made of the electrically conductive material is fitted over the container, effects of the static electricity can be prevented at the time of weighing and the container can be weighed easily and accurately. Moreover, because the container is carried from the carrying-in stage to the carrying-out stage with the cylinder body fitted over the container, operations for attaching and removing the cylinder body at the weighing stages become unnecessary, which substantially shortens the processing times at the weighing stages and further speeds up the entire weighing operation of the filled amount.
(3) The cylinder body is fitted over the container. Therefore, even if the container falls down easily or cannot stand for itself in an attitude with an opening for filling oriented upward, it is possible to easily hold the container in the predetermined attitude. As a result, the object to be filled can be reliably filled at the filling stage and the filled container is easily carried to the carrying-out stage irrespective of the shape and the material of the container.

### BRIEF DESCRIPTION OF THE DRAWINGS

Fig. 1 is a partially cutaway plan view of a filled amount weighing apparatus and showing a first embodiment of the present invention.
Fig. 2 is an enlarged plan view of an area around a container housing portion in the first embodiment.
Fig. 3 is an enlarged sectional view of the area around the container housing portion in the first embodiment.
Fig. 4 is a sectional view at a pre-weighing stage in the first embodiment.
Fig. 5 is a sectional view at a filling stage in the first embodiment.
Fig. 6 is a plan view of a filled amount weighing apparatus and showing a second embodiment of the present invention.
Fig. 7 is a sectional view at a pre-weighing stage in the second embodiment.
Fig. 8 is a sectional view at a filling stage in the second embodiment.
Fig. 9 is a plan view of a filled amount weighing apparatus and showing a third embodiment of the present invention.
Fig. 10 is a schematic configuration view of a filled amount weighing apparatus and showing a fourth embodiment of the present invention.
Fig. 11 is a sectional view at a carrying-in stage in the fourth embodiment.
Fig. 12 is a sectional view at a pre-weighing stage in the fourth embodiment.
Fig. 13 is a sectional view at a filling stage in the fourth embodiment.
Fig. 14 is a sectional view at a carrying-out stage in the fourth embodiment.
Fig. 15 is a partially cutaway plan view of an essential portion of a filled amount weighing apparatus and showing a fifth embodiment of the present invention.
Fig. 16 is a partially cutaway side view at a filling and weighing stage in the fifth embodiment.
Fig. 17 is a partially cutaway plan view of an essential portion of a filled amount weighing apparatus and showing a sixth embodiment of the present invention.
Fig. 18 is a vertical sectional side view at a weighing stage in the sixth embodiment.
Fig. 19 is a sectional view at a pre-weighing stage and showing a variation of the second embodiment.

### DESCRIPTION OF REFERENCE SIGNS

1: Filled amount weighing apparatus
2: Carrying means
3: Shaft center
4: Container housing portion
5: Carrying path
6: Carrying-in stage
7: Pre-weighing stage
8: Filling stage
9: Post-weighing stage
10: Carrying-out stage
12: Container
13: First weighing means (first electronic balance)
14: Filling device
15: Second weighing means (second electronic balance)
17: Windshield member
18: Container doorway
19: Cylinder body
30: Auxiliary windshield member
34: Object to be filled
37: Auger screw
44: Inspection stage
46: Defective item rejecting means
48: Insertion stage
49: Taking-out stage
50: Cylinder body retrieving path
52: Pinching means
61: Filling and weighing stage

### BEST MODES FOR CARRYING OUT THE INVENTION

Embodiments of the present invention will be described below based on the drawings.

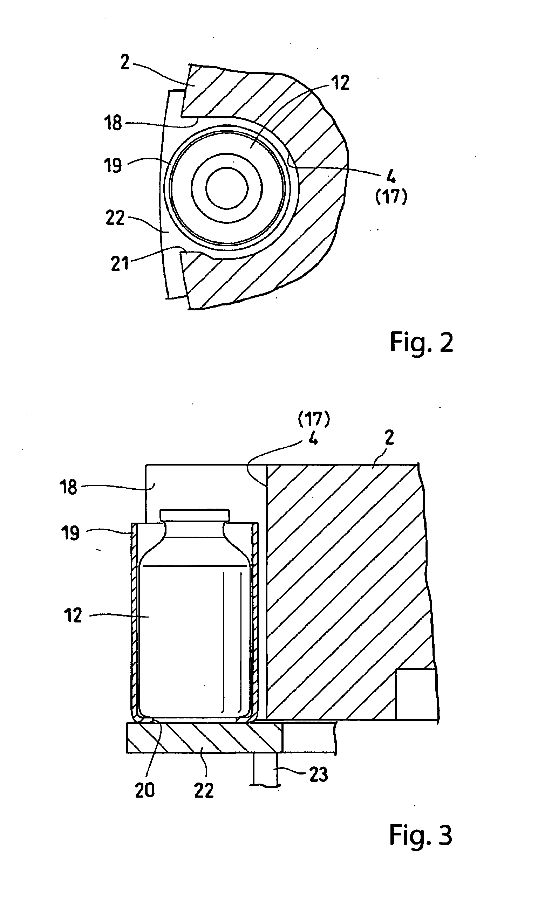

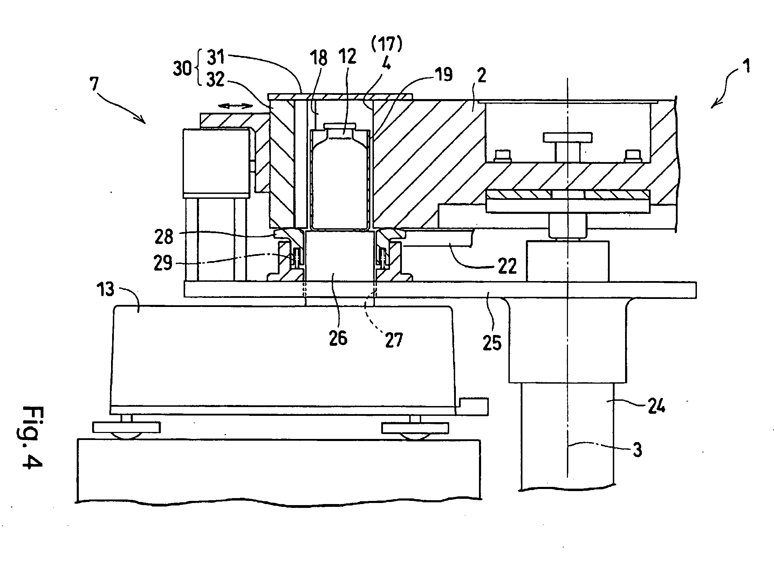

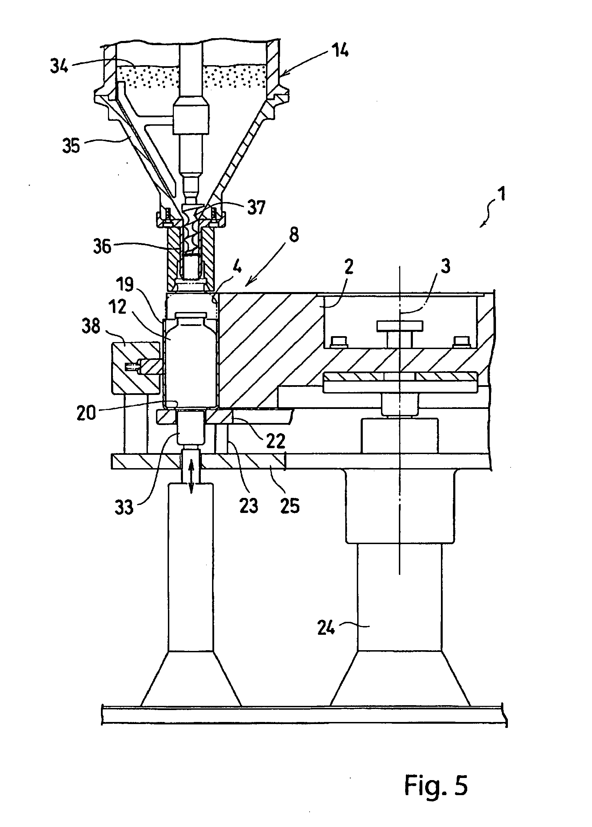

Figs. 1 to 5 show a first embodiment. Fig. 1 is a partially cutaway plan view of a filled amount weighing apparatus, Fig. 2 is an enlarged plan view of an area around a container housing portion, Fig. 3 is an enlarged sectional view of the area around the container housing portion, Fig. 4 is a sectional view at a pre-weighing stage, and Fig. 5 is a sectional view at a filling stage.

As shown in Fig. 1, the filled amount weighing apparatus (1) includes disk-shaped carrying means (2) disposed in a horizontal direction and the carrying means (2) is formed to be rotatable about a vertical shaft center (3). A plurality of container housing portions (4) are formed to be recessed in a peripheral edge of the carrying means (2) at equal intervals and a carrying path (5) is provided along a half of a circumference of the peripheral edge.

The filled amount weighing apparatus (1) includes a carrying-in stage (6), a pre-weighing stage (7), a filling stage (8), a post-weighing stage (9), and a carrying-out stage (10) in this order along the carrying path (5).

At the carrying-in stage (6), an empty container (12) which has been carried by a carrying-in conveyer (11) is housed into the container housing portion (4). The container housing portion (4), in which the container (12) is housed, is moved to the carrying-out stage (10) along the carrying path (5) by rotation of the carrying means (2). At this time, the carrying means (2) is intermittently rotated so that the container housing portion (4) temporarily stops at the respective stages (6, 7, 8, 9, and 10).

The pre-weighing stage (7) is provided with a first electronic balance (13) by which the empty container (12) carried from the carrying-in stage (6) is weighed.

The filling stage (8) is provided with a filling device (14) and an object to be filled is filled into the weighed empty container (12) carried from the pre-weighing stage (7).

The post-weighing stage (9) is provided with a second electronic balance (15) by which the filled container (12) carried from the filling stage (8) is weighed. Weight of the empty container (12) obtained by the weighing at the pre-weighing stage (7) is subtracted to calculate a filled amount in each container (12). The calculated filled amount is fed back to control means of the filling device (14). In this way, the filled amount which varies with time is adjusted to a target value, defective items are considerably reduced, and yield is improved.

At the carrying-out stage (10), the filled container (12) after the weighing and carried from the post-weighing stage (9) is taken out of the container housing portion (4), transferred onto a carrying-out conveyer (16), and sent out to the next process such as a capping process. The container housing portion (4) which has moved to the carrying-out stage (10) is moved to the carrying-in stage (6) by further rotation of the carrying means (2).

Next, with reference to Fig. 1, the respective stages will be specifically described based on Figs. 2 to 5.

As shown in Figs. 2 and 3, the carrying means (2) includes, at the container housing portion (4), a windshield member (17) covering a part of the periphery of the container (12) and a container doorway (18) formed at a remaining part of the periphery of the container (12). In other words, the container housing portion (4) is formed to cover more than half of the periphery of the container (12) and a peripheral wall of the container housing portion (4) forms the windshield member (17) for intercepting room-interior winds. A remaining part of the periphery of the container housing portion (4) is open as the container doorway (18). The empty container (12) is sent into the container housing portion (4) through the container doorway (18) at the carrying-in stage (6) and the filled container (12) is taken out through the container doorway (18) at the carrying-out stage (10).

As shown in Fig. 3, a metal cylinder body (19) made of electrically conductive material is fitted in advance over the empty container (12) sent into the carrying-in stage (6). Through a bottom wall of the metal cylinder body (19), an operation hole (20) is formed. The container (12) over which the metal cylinder body (19) is fitted is housed in the container housing portion (4), moved to the carrying-out stage (10), sent out of the carrying-out stage (10), and then taken out of the metal cylinder body (19).

As shown in Fig. 2, a protrusion (21) for preventing slipping out is formed on an inner peripheral face of the container housing portion (4) to protrude inward from an upstream side in a carrying direction of the container doorway (18). The container (12) which is being carried is prevented by this protrusion (21) from slipping out of the container doorway (18). As shown in Fig. 3, below the container housing portion (4), a support plate (22) is fixed to a fixing portion (23) along the carrying path (5). The container (12) is pushed against the inner peripheral face of the container housing portion (4) by rotation of the carrying means (2) and moves on the support plate (22) while sliding.

As shown in Fig. 4, below the carrying means (2), a fixing plate (25) is attached to a periphery of a rotating shaft (24) in such a manner that it cannot rotate. As shown in Fig. 1, a portion of the fixing plate (25) along the carrying path (5) extends further outward than the peripheral edge of the carrying means (2) in a plan view. The support plate (22) is fixed to the fixing plate (25) by the fixing portion (23).

As shown in Figs. 1 and 4, the first electronic balance (13) as the weighing means and provided to the pre-weighing stage (7) has a measuring portion (26) inserted through an insertion hole (27) formed in the fixing plate (25) and an upper face of the measuring portion (26) is disposed on substantially the same level as an upper face of the support plate (22). Around the measuring portion (26), an annular protecting member (28) is attached onto the fixing plate (25) with a shock absorbing member (29) interposed therebetween. The container housing portion (4) is supported on the protecting member (28) and does not come in contact with the measuring portion (26).

At the pre-weighing stage (7), an auxiliary windshield member (30) is provided. The auxiliary windshield member (30) is made up of a top panel portion (31) and a side lid portion (32). The top panel portion (31) is made of electrically conductive material and fixed to the fixing plate (25) and covers an upper portion of the container housing portion (4). On the other hand, the side lid portion (32) is supported on the fixing plate (25) and moves forward and backward with respect to the container housing portion (4) to thereby open and close the container doorway (18). The side lid portion (32) is supported on the protecting member (28) and prevented from coming in contact with the measuring portion (26). When the side lid portion (32) moves forward to cover the container doorway (18), effects of winds from surroundings and static electricity on the container (12) in the container housing portion (4) are prevented. As a result, the container (12) is accurately weighed by the first electronic balance (13).

As show in Figs. 1 and 5, at the filling stage (8), the filling device (14) is disposed above the container housing portion (4) and lifting and lowering means (33) is disposed below the container housing portion (4). As the filling device (14), a powder filling device is used. The filling device (14) has a funnel (35) housing a powdered object (34) to be filled, a dispensing portion (36) is provided at a lower end of the funnel (35), and an auger screw (37) is disposed in the dispensing portion (36). In the present invention, it is needless to say that other filling devices such as a vacuum pressure filling device using a plunger pump, a diaphragm pump, or a piston can be used to fill other objects to be filled such as a solution.

As shown in Figs. 1 and 5, at the filling stage (8), a cylinder body retaining portion (38) is provided to the fixing plate (25). When the container (12) is carried into the filling stage (8), the metal cylinder body (19) is fixed and retained by the cylinder body retaining portion (38). If the lifting and lowering means (33) lifts in this state, the container (12) is lifted to a position immediately below the dispensing portion (36) and then the auger screw (37) rotates to fill a predetermined amount of object (34) to be filled into the container (12). Then, the lifting and lowering means (33) lowers and the filled container (12) is housed in the metal cylinder body (19) and carried to the next post-weighing stage (9) by rotation of the carrying means (2).

The post-weighing stage (9) is formed similarly to the pre-weighing stage (7) and operated in the same manner. A measurement value at the pre-weighing stage (7) is subtracted from a measurement value at this post-weighing stage (9) to calculate the filled amount into the container (12). This value of the filled amount is fed back to a controller (not shown) of the filling device (14) and the filled amount by the filling device (14) is adjusted to the target value.

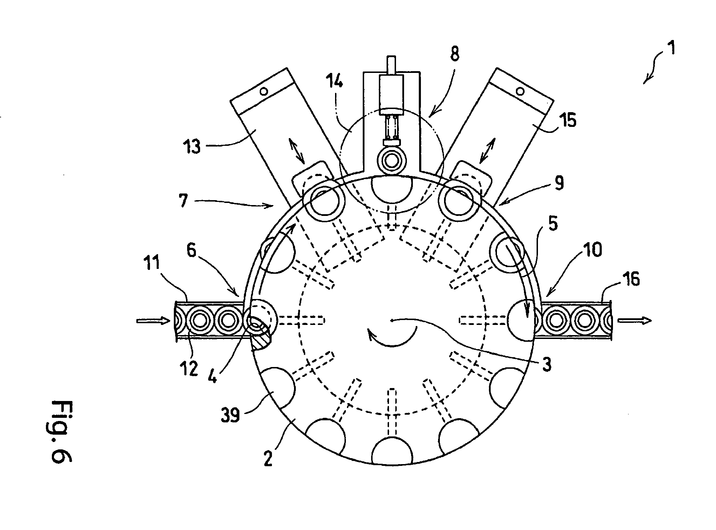

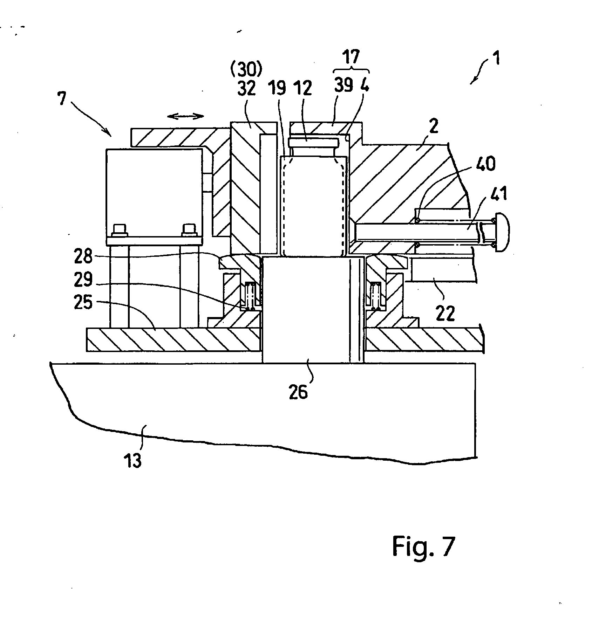

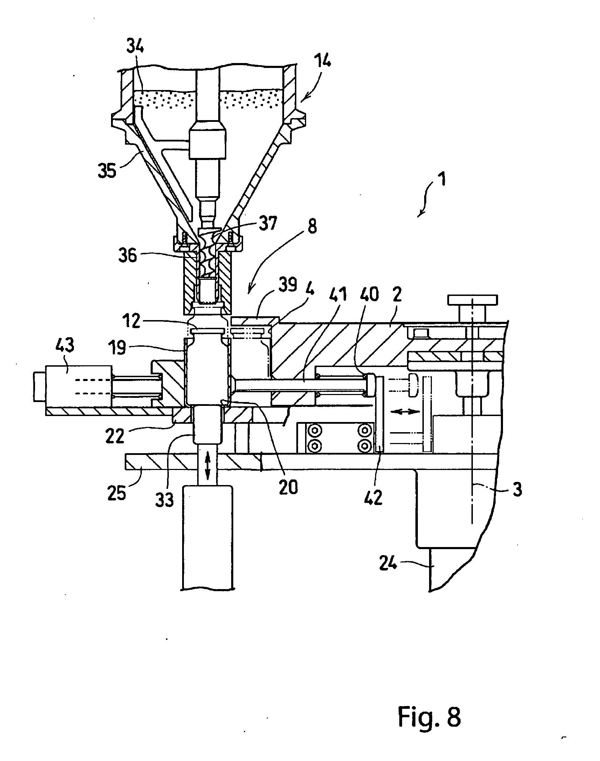

Figs. 6 to 8 show a second embodiment of the present invention. Fig. 6 is a plan view of a filled amount weighing apparatus, Fig. 7 is a sectional view at a pre-weighing stage, and Fig. 8 is a sectional view at a filling stage.

As shown in Fig. 6, the second embodiment includes disk-shaped carrying means (2) and a carrying-in stage (6), a pre-weighing stage (7), a filling stage (8), a post-weighing stage (9), and a carrying-out stage (10) in this order along a half of a peripheral edge of the carrying means (2) similarly to the first embodiment.

In the above-described first embodiment, the upper portion of the container housing portion (4) is open and this upper portion is covered with the top panel portion (31) at the respective weighing stages (7, 9). In the second embodiment, on the other hand, as shown in Figs. 6 and 7, the upper portion of the container housing portion (4) is covered with an upper lid portion (39) formed integrally with the carrying means (2). At the pre-weighing stage (7), an auxiliary windshield member (30) formed of a side lid portion (32) is provided to be able to move forward and backward with respect to the container housing portion (4).

Because the upper portion of the container housing portion (4) is covered with the upper lid portion (39), filling by the filling device (14) is not easy when the container (12) is housed in the container housing portion (4). Therefore, in the second embodiment, as shown in Figs. 6 and 8, the container (12) is pushed out of the container housing portion (4) to a position off the upper lid portion (39) in a plan view and is filled with the object to be filled by the filling device (14) at the filling stage (8).

In other words, each of the container housing portions (4) is provided with pushing-out means (41) having a biasing spring (40) and the pushing-out means (41) is biased to a standby position side (shaft center side) by resilience of the biasing spring (40) at the stages other than the filling stage (8) as shown in Fig. 7, for example.

On the other hand, as shown in Fig. 8, a pushing-out operation portion (42) for pushing the pushing-out means (41) outward in a radial direction of the carrying means (2) is provided below the carrying means (2) at the filling stage (8). Outside the container housing portion (4), returning means (43) is fixed to the fixing plate (25) with the support plate (22) interposed therebetween.

When the container housing portion (4) stops at the filling stage (8), the pushing-out operation portion (42) is driven and the pushing-out means (41) moves the container (12) to the position below the filling device (14) against the resilience of the biasing spring (40). At this time, the metal cylinder body (19) fitted over the container (12) is pinched between the pushing-out means (41) and returning means (43). Then, the lifting and lowering means (33) disposed in a lower position lifts to lift the container (12) to a position immediately below a dispensing portion (36) of the filling device (14) and a predetermined amount of object (34) to be filled is filled into the container (12). Then, after the lifting and lowering means (33) lowers to put the container (12) into the metal cylinder body (19), the pushing-out means (41) is returned to the standby position. The container (12) is housed into the container housing portion (4) by the returning means (43) and carried to the next post-weighing stage (9) by rotation of the carrying means (2). Other structures are similar to those in the first embodiment and operate in the same manners and therefore will not be described.

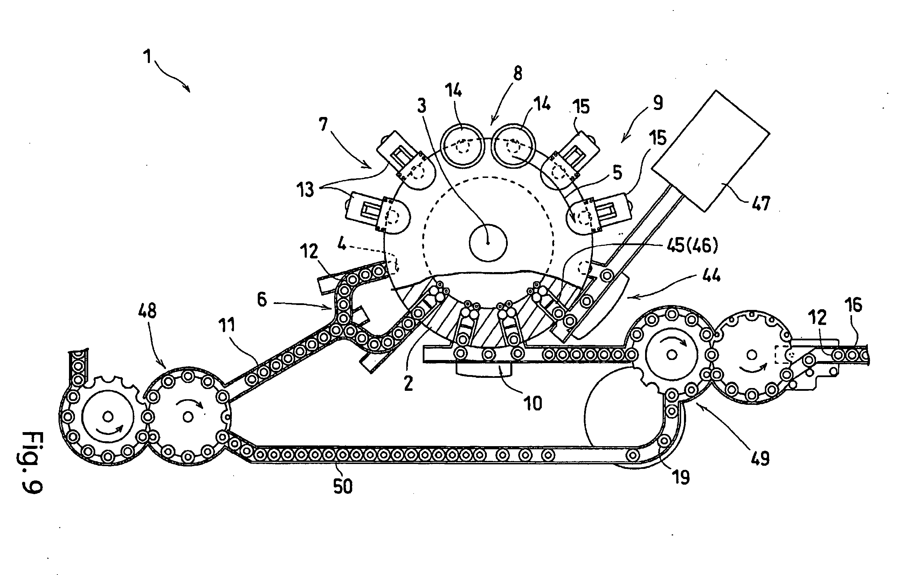

Fig. 9 is a plan view of a filled amount weighing apparatus and showing a third embodiment of the present invention.

In the third embodiment, an inspection stage (44) is provided between the post-weighing stage (9) and the carrying-out stage (10). Ejecting means (45) for ejecting the container (12) is attached to each of the container housing portions (4) in carrying means (2). At the inspection stage (44), the ejecting means (45) also serves as defective item rejecting means (46) and is actuated when a filled amount calculated from weighing values of a first electronic balance (13) and a second electronic balance (15) is out of a predetermined control range to eject the filled container (12) positioned at the inspection stage (44) from a carrying path (5) to a defective item tray (47).

In the first embodiment and the second embodiment, one stage is provided as each of the stages to the carrying path. In the third embodiment, on the other hand, two stages are provided as each of the stages from a carrying-in stage (6) to a carrying-out stage (10) along the carrying path (5). Furthermore, an insertion stage (48) is provided in a vicinity of the carrying-in stages (6) and the empty container (12) is inserted into the metal cylinder body (19) at this insertion stage (48). Moreover, a taking-out stage (49) is provided in a vicinity of the carrying-out stages (10) and the filled container (12) is taken out of the metal cylinder body (19) at this taking-out stage (49). A cylinder body retrieving path (50) is formed between the taking-out stage (49) and the insertion stage (48) and the metal cylinder body (19) is circulated from the taking-out stage (49) to the insertion stage (48) through this cylinder body retrieving path (50). Other structures are similar to those in the first embodiment and operate in the same manner and therefore will not be described.

The insertion stage, the taking-out stage, and the cylinder body retrieving path can be applied to the first embodiment and the second embodiment. In the third embodiment, the cylinder body retrieving path may be omitted, and the cylinder bodies may be fed to the insertion stage by a cylinder body feeder and the cylinder bodies may be retrieved from the taking-out stage into a retrieving container instead. Moreover, the inspection stage is preferably provided in the first embodiment and the second embodiment.

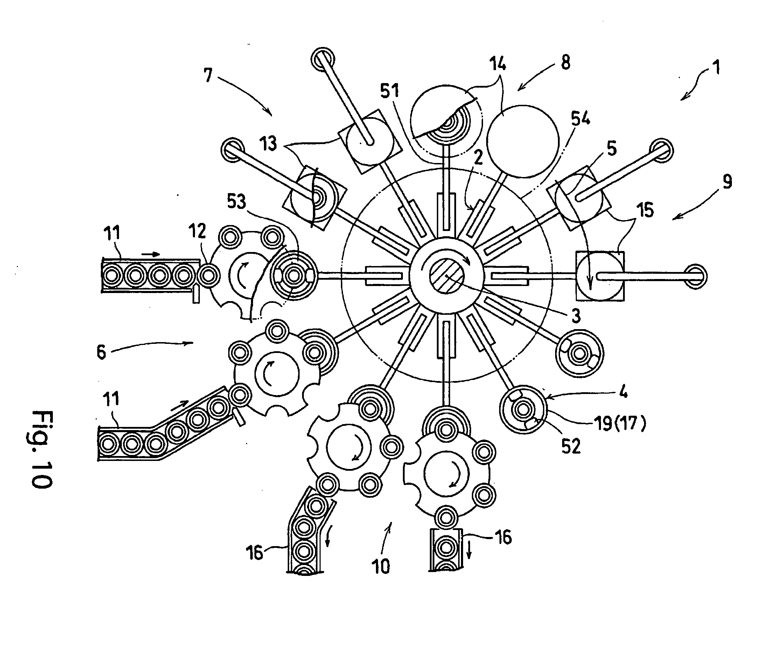

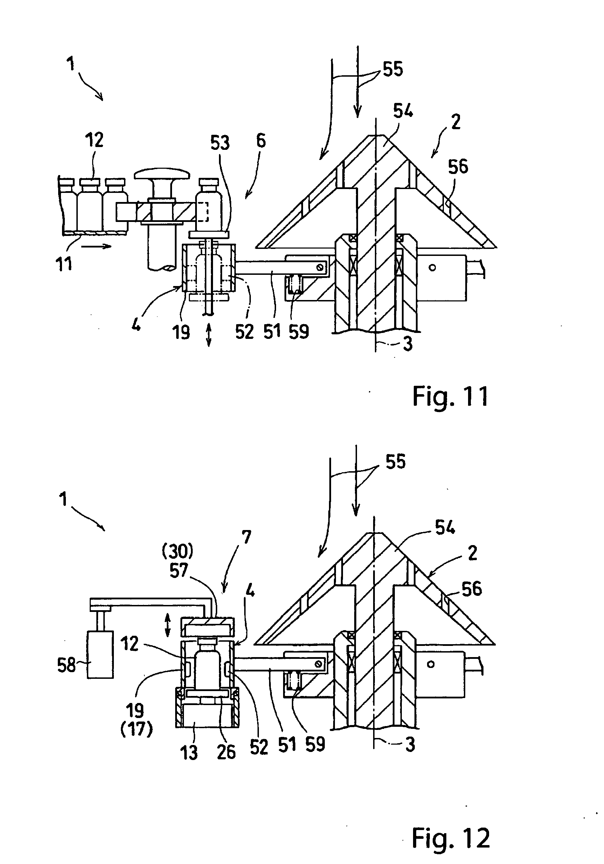

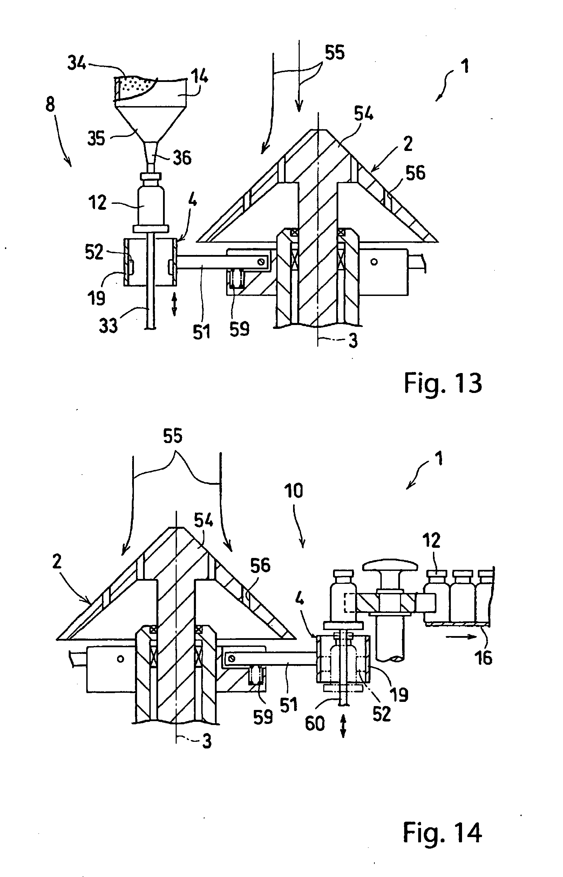

Figs. 10 to 14 show a fourth embodiment of the present invention. Fig. 10 is a schematic configuration view of a filled amount weighing apparatus, Fig. 11 is a sectional view at a carrying-in stage, Fig. 12 is a sectional view at a pre-weighing stage, Fig. 13 is a sectional view at a filling stage, and Fig. 14 is a sectional view at a carrying-out stage.

As shown in Fig. 10, the fourth embodiment includes carrying means (2) having a plurality of support arms (51). In the fourth embodiment, similarly to the third embodiment, two stages are provided as each of respective stages from a carrying-in stage (6) to a carrying-out stage (10) along a carrying path (5). In the present invention, however, one stage may be provided as each of the respective stages in the fourth embodiment.

A container housing portion (4) provided to a tip end of the support arm (51) has a metal cylinder body (19) and pinching means (52) is provided on an inner face of the container housing portion (4). The container (12) housed in the container housing portion (4) is pinched by the pinching means (52) and carried.

As shown in Figs. 10 and 11, the empty container (12) which has been carried by a carrying-in conveyer (11) is housed into the container housing portion (4) by a lifting and lowering table (53) and is pinched by the pinching means (52) at the carrying-in stage (6). Upper portions of base portions of the support arms (51) are covered with a conical cover member (54) and through holes (56) for letting through part of a laminar flow (55) are formed through the cover member (54).

As shown in Figs. 10 and 12, at each of the pre-weighing stages (7), a metal lid member (57) is disposed so that it can be lifted and lowered by opening and closing means (58). Moreover, a protecting member (28) for receiving the container housing portion (4) is provided around a measuring portion (26) of the first electronic balance (13).

When the container housing portion (4) moves to the pre-weighing stage (7), the lid member (57) is lowered and placed on the metal cylinder body (19). The support arm (51) turns slightly downward as a result of this placement of the lid member (57) and the container (12) in the container housing portion (4) is placed on the measuring portion (26) and released from the pinch by the pinching means (52). The container (12) is covered with the metal cylinder body (19) and the lid member (57). In other words, the metal cylinder body (19) also serves as a windshield member (17) and the lid member (57) also serves as an auxiliary windshield member (30). Therefore, the container (12) is protected from effects of room-interior winds and static electricity and weighed accurately by the first electronic balance (13). When the weighing is finished, the container (12) is pinched again by the pinching means (52) and the lid member (57) is lifted. The support arm (51) slightly turns upward due to resilience of a return spring (59) provided in a vicinity of the base portion and the container (12) is slightly lifted from an upper face of the measuring portion (26). Then, the carrying means (2) rotates to carry the container (12) to the filling stage (8).

As shown in Figs. 10 and 13, at each of the filling stages (8), a filling device (14) is disposed in an upper position and lifting and lowering means (33) is disposed in a lower position. If the container housing portion (4) moves to the filling stage (8), the container (12) is supported by the lifting and lowering means (33) and the lifting and lowering means (33) lifts after the pinch by the pinching means (52) is released. The container (12) is lifted to a position immediately below a dispensing portion (36) of the filling device (14) and a predetermined amount of object (34) to be filled is filled into the container (12). When the filling is finished, the lifting and lowering means (33) lowers and the filled container (12) is housed into the container housing portion (4) and pinched again by the pinching means (52). Then, the carrying means (2) rotates to carry the container (12) to the post-weighing stage (9). The post-weighing stage (9) is formed similarly to the pre-weighing stage (7) and operated in the same manner.

When the weighing of the filled container (12) is finished at the post-weighing stage (9), the carrying means (2) rotates to carry the container (12) to the carrying-out stage (10). In the fourth embodiment, similarly to the third embodiment, it is preferable to provide an inspection stage between the post-weighing stages (9) and the carrying-out stages (10).

As shown in Figs. 10 and 14, the container (12) that has been carried to the carrying-out stage (10) is released from the pinch by the pinching means (52) and then taken out of the container housing portion (4) by a second lifting and lowering table (60), transferred onto a carrying-out conveyer (16), and sent out to the next process.

In the cases described in the first to fourth embodiments, the pre-weighing stage (7), the filling stage (8), and the post-weighing stage (9) are provided in this order from an upstream side along the carrying path (5). However, these respective stages may be provided in the same position in the present invention.

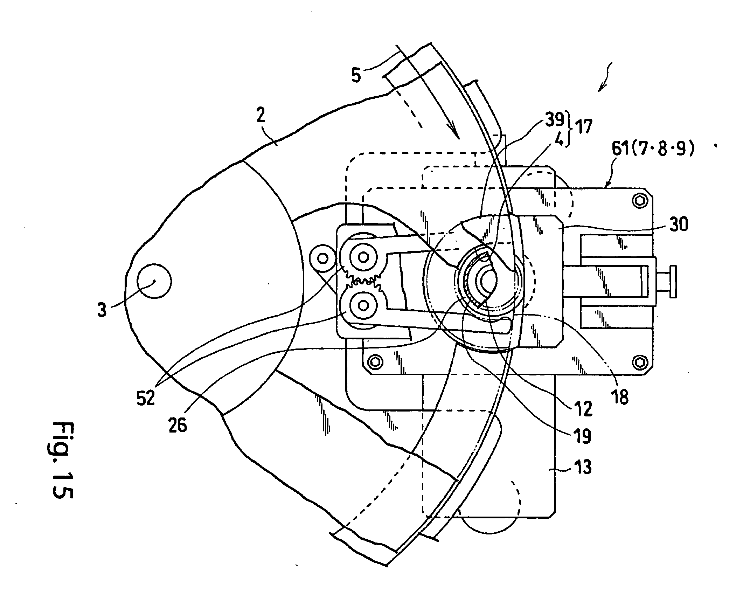

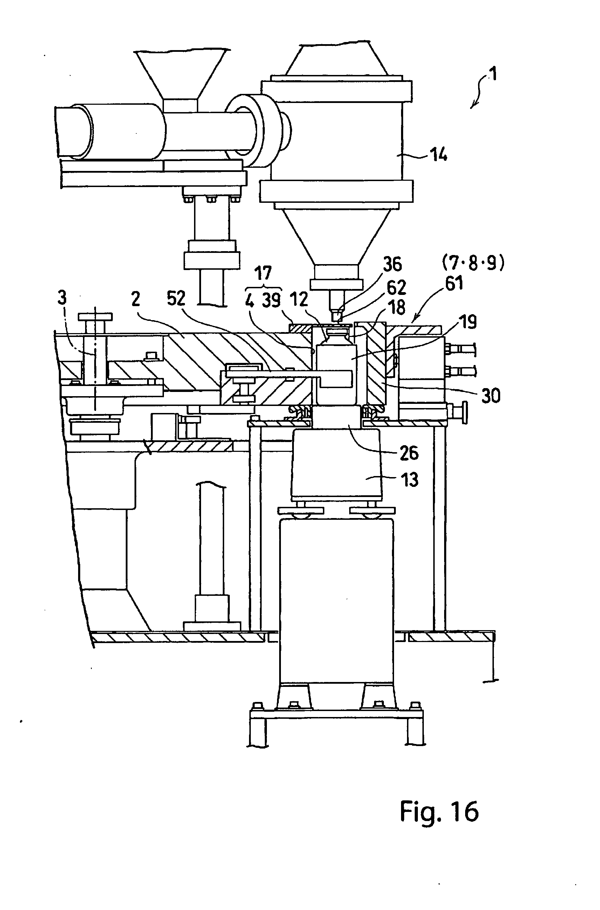

In other words, the filled amount weighing apparatus (1) in the fifth embodiment shown in Figs. 15 and 16 includes disk-shaped carrying means (2) disposed in a horizontal direction and the carrying means (2) is rotatable about a vertical shaft center (3) similarly to the first embodiment. Three container housing portions (4), for example, are formed to be recessed in a peripheral edge of the carrying means (2) at equal intervals and a carrying path (5) is formed along about two-thirds of the peripheral edge. However, unlike the first embodiment, a filling and weighing stage (61) is disposed at a middle portion of the carrying path (5) and the filling and weighing stage (61) serves as a pre-weighing stage (7), a filling stage (8), and a post-weighing stage (9). An electronic balance (13) as weighing means is disposed below the container housing portion (4) that has moved to the filling and weighing stage (61) and a filling device (14) is disposed above the container housing portion (4).

A container (12) over which a metal cylinder body (19) is fitted is housed in the container housing portion (4). A peripheral wall of the container housing portion (4) is formed to cover more than half of the container (12). An upper portion of the container housing portion (4) is closed with an upper lid portion (39). A filling hole (62) is vertically formed through the upper lid portion (39) in a position immediately below the dispensing portion (36) of the filling device (14). The upper lid portion (39) and the peripheral wall of the container housing portion (4) form a windshield member (17). On the other hand, a container doorway (18) is formed at a remaining portion of the container housing portion (4) around the container (12) where the windshield member (17) is not formed.

At the pre-weighing stage (7) and the post-weighing stage (9), i.e., the filling and weighing stage (61), an auxiliary windshield member (30) is formed in a position facing the container doorway (18). The auxiliary windshield member (30) can move forward and backward with respect to the container housing portion (4) and can cover and close the container doorway (18) when it moves forward toward the container housing portion (4).

Furthermore, the container housing portion (4) is provided with the pinching means (52). The cylinder body (19) housed in the container housing portion (4) is pinched by the pinching means (52) while fitted over the container (12) and carried on the carrying path (5). The pinch by the pinching means (52) is released when the container housing portion (4) reaches the filling and weighing stage (61) and the cylinder body (19) is pinched again when the weighing is finished.

Next, operation for weighing the filled amount by using the filled amount weighing apparatus will be described.

First, the metal cylinder body (19) is fitted over the container (12). The container (12) over which the cylinder body (19) is fitted is housed into the container housing portion (4) from the container doorway (18) at a carrying-in stage outside the drawing and the cylinder body (19) is pinched by the pinching means (52). Next, the carrying means (2) makes a one-thirds rotation and, as a result, the container housing portion (4) moves on a support plate (22) along the carrying path (5) to the filling and weighing stage (61).

When the container housing portion (4) reaches this filling and weighing stage (61), the auxiliary windshield member (30) moves forward to close the container doorway (18). Then, the pinch by the pinching means (52) is released and the empty container (12) over which the metal cylinder body (19) is fitted is placed on the measuring portion (26) of the electronic balance (13) and weighed. At this time, the container (12) is protected by the windshield member (17) and the auxiliary windshield member (30) from the effects of the winds from surroundings and protected by the metal cylinder body (19) from effects of the static electricity and therefore can be weighed accurately. Then, the object to be filled and sent out of the dispensing portion (36) of the filling device (14) is fed into the container (12) through the filling hole (62).

After that, the filled container (12) is weighed by the electronic balance (13) in the same manner as the empty container, the cylinder body (19) is pinched by the pinching means (52), and then the carrying means (2) makes a one-thirds rotation. As a result, the container housing portion (4) moves from the filling and weighing stage (61) to a carrying-out stage outside the drawing, the pinch by the pinching means (52) is released, and then, the container (12) is taken out with the cylinder body (19) from the container housing portion (4).

In the cases described in the first to fifth embodiments, the carrying path is disposed along the circumference around the vertical shaft center and the carrying means rotates in the horizontal direction around the shaft center. In the present invention, however, the carrying path from the carrying-in stage to the carrying-out stage may be disposed linearly and the carrying means may be moved along the carrying path.

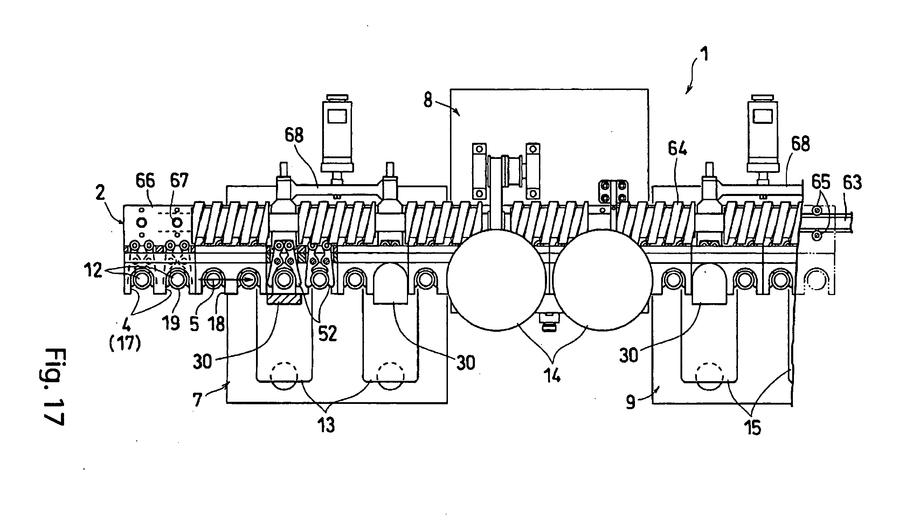

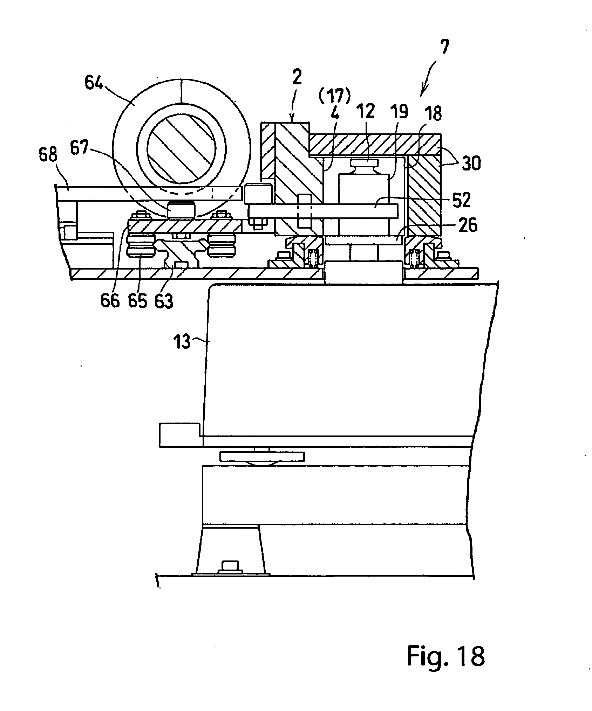

In other words, in a sixth embodiment shown in Figs. 17 and 18, a carrying path (5) between a carrying-in stage and a carrying-out stage outside the drawing is disposed linearly and the pre-weighing stage (7), the filling stage (8), and the post-weighing stage (9) are disposed in this order on the carrying path (5). A plurality of unit-like carrying means (2) each having two container housing portions (4) are successively and intermittently move along the carrying path (5).

In a position along the carrying path (5), a carrying rail (63) and a driving screw (64) over the rail (63) are disposed. The carrying means (2) includes a driving portion (66) having on its lower face four wheels (65) and the wheels (65) pinch the carrying rail (63). An engagement bearing (67) is provided on an upper face of the driving portion (66) and this engagement bearing (67) is engaged with a root portion of the driving screw (64).

In the carrying means (2), each container housing portion (4) has pinching means (52). Each of the pre-weighing stage (7) and the post-weighing stage (9) is provided with pinch releasing means (68).

Two first electronic balances (13) are disposed at the pre-weighing stage (7) and two second electronic balances (15) are disposed at the post-weighing stage (9). Two filling devices (14) are disposed at the filling stage (8). These devices (13, 14, and 15) disposed at the respective stages (7, 8, and 9) are disposed for every three container housing portions (4).

A peripheral wall of the container housing portion (4) forms a windshield member (17) and a container doorway (18) is formed on a front side. An upper face of the container housing portion (4) is open so that filling from the filling device (14) is possible. On the other hand, at the pre-weighing stage (7) and the post-weighing stage (9), an auxiliary windshield member (30) for covering and closing the upper face and the container doorway (18) of the container housing portion (4) is fixed above each of the electronic balances (13 and 15).

Next, operation for weighing the filled amount by using the filled amount weighing apparatus (1) will be described.

First, the container (12) over which the metal cylinder body (19) is fitted is housed into the container housing portion (4) at the carrying-in stage outside the drawings and the cylinder body (19) is pinched by the pinching means (52). In this state, the carrying means (2) is intermittently carried from the carrying-in stage to the pre-weighing stage (7) by rotation of the driving screw (64).

When the carrying means (2) reaches the pre-weighing stage (7), the pinch releasing means (68) moves forward and works on the pinching means (52) of the container housing portion (4) positioned above each of the first electronic balances (13) to release the pinch. As a result, the empty container (12) over which the cylinder body (19) is fitted is placed on the measuring portion (26) of the first electronic balance (13) and weighed. At this time, the upper face and the container doorway (18) of the container housing portion (4) are covered and closed with the auxiliary windshield member (30). As a result, the container (12) is protected from the effects of the winds from surroundings by the windshield member (17) and the auxiliary windshield member (30) and is protected from the effect of the static electricity by the metal cylinder body (19) and therefore can be weighed accurately.

Next, the pinch releasing means (68) moves backward, the cylinder body (19) is pinched by the pinching means (52), and the carrying means (2) is intermittently moved toward the filling stage (8) by rotation of the driving screw (64). The carrying means (2) moves intermittently by two of the arranged container housing portions (4). On the other hand, each of the two first electronic balances (13) is disposed for every three container housing portions (4) at the pre-weighing stage (7). As a result, a sufficient interval can be secured between the first electronic balances (13) and containers (12) in all the container housing portions (4) can be weighed successively due to the intermittent movement of the carrying means (2). This is also true at the filling stage (8) and the post-weighing stage (9). Incidentally, if n devices are provided and the carrying means is moved intermittently by n container housing portions, it is preferable to arrange each of the respective devices for every (n+1) or (n-1) container housing portions, because similar operation can be obtained.

The empty container (12) weighed at the pre-weighing stage (7) is carried by the intermittent movement of the carrying means (2) to the filling stage (8) where it is filled with a predetermined object to be filled by the filling device (14) and then is carried to the post-weighing stage (9) where the filled container (12) is weighed by the second electronic balance (15) in the same manner as at the pre-weighing stage (7).

Then, the carrying means (2) is carried to the carrying-out stage outside the drawings where the filled container (12) is taken out of the container housing portion (4) together with the cylinder body (19) fitted over the container (12) and then is returned to the carrying-in stage via a circulation path (not shown). On the other hand, the filled container (12) taken out of the cylinder body (19) is carried to the next process and the cylinder body (19) is returned to a stage before the carrying-in stage and fitted over a new empty container (12).

The filled amount weighing apparatus described in each of the above embodiments is shown as an example in order to embody a technical idea of the present invention, does not restrict shapes and structures of the carrying means and respective stages, the weighing apparatus, the filling device, and the like to those in the embodiments, and can be changed in various ways without departing from the scope of claims of the present invention.

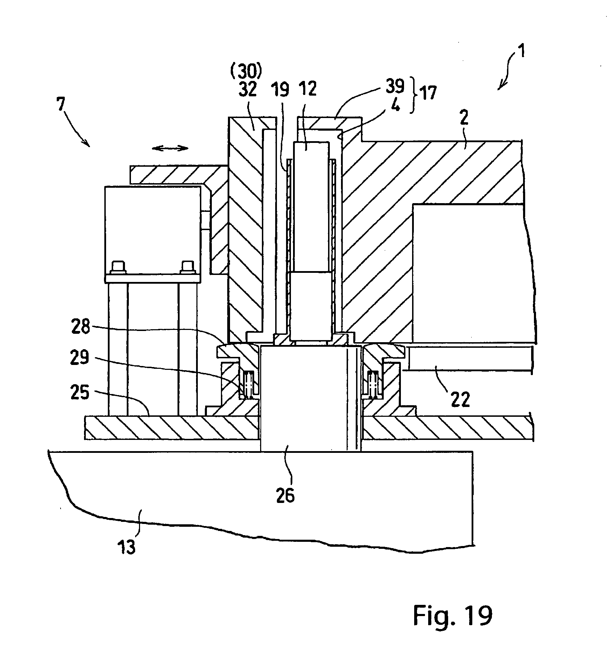

For example, in the case described in each of the above embodiments, the vials are used as the containers. However, containers in other shapes, having other structures, and made of other materials can be used in the present invention. For example, in a variation of the second embodiment shown in Fig. 19, a prefilled syringe is used as the container (12). In this case, the metal cylinder body (19) fitted over the container (12) has a broad bottom face and the container (12) housed in the cylinder body (19) does not easily fall down. Therefore, the container (12) can be stably placed on the measuring portion (26) of the electronic balance (13), for example.

It is essential only that the container used in the present invention have a filling opening in one position. Even a container such as a capsule having a spherical surface on an opposite side from the filling opening or a container such as a synthetic resin bag that cannot easily stand up for itself can be used, if the cylinder body is fitted over the container.

In the case described in each of the above embodiments, powder is used as the object to be filled and is filled into the container by the powder filling device having the auger screw. The powder filling device can accurately control a rotation amount of the auger screw and has a satisfactory proportional relationship between the rotation amount and the filled amount and therefore has an advantage in its capability to accurately correct the filled amount by feeding back the value calculated by the weighing. However, the present invention can be applied to various objects to be filled such as all kinds of solutions besides powder and granular substances and other kinds of devices can be used as the filling device according to the object to be filled. For example, if the object to be filled is a solution or the like, a pressure-controlled feeder such as a vacuum pressure filling device using a plunger pump, a diaphragm pump, or a piston can be used as the filling device.

Furthermore, the first embodiment and the second embodiment have an advantage in their capability to reliably prevent flying apart of the object to be filled by filling the object to be filled after lifting the container to the position immediately below the dispensing portion of the filling device at the filling stage. In the present invention, however, the object to be filled may be filled from the filling device into the container housed in the container housing portion without lifting the container at the time of filling as in the fifth embodiment, for example, which has an advantage of speeding up the filling speed. It is needless to say that the container can be lifted at the time of filling in the fifth embodiment.

In the above embodiments, the electronic balance is used as the weighing means for weighing the container. In the present invention, however, other weighing means including a load cell may be used. Note that, the present invention is suitable for accurately filling a small amount such as 50 mg and 100 mg, for example, to prevent production of defective items and the electronic balance is preferable as the weighing means, because it can precisely and swiftly weigh the small amount.

In the above embodiments, the cylinder body made of electrically conductive material is formed of the metal cylinder body. However, it is essential only that the cylinder body used in the present invention be able to prevent effects of the static electricity and the cylinder body may be made of other materials such as electrically conductive synthetic resin.

Moreover, in the above embodiments, it is unnecessary to attach a protecting cap or the like at the weighing stage, because the container housing portion has the windshield member. In the present invention, however, the protecting cap made of electrically conductive material may be disposed above each weighing stage and the container placed on the weighing means may be covered with the protecting cap as in the above-described prior art.

Obviously, the object to be filled is not restricted to the pharmaceutical product but may be health foods, other foods, or substances other than foods and the filled amount is not restricted to the small amount of about 50 to 100 mg.

### INDUSTRIAL APPLICABILITY

In the filled amount weighing apparatus of the present invention, the container carrying times between the respective stages are shortened, the processing time at the weighing stage is shortened, the weighing can be carried out easily and accurately, the entire weighing operation can be sped up, and the productivity can be increased. Therefore, the apparatus is especially suitable for filling the small amount of pharmaceutical product into the container such as the vial but can also be used suitably for filling other objects to be filled into various containers.

## Claims

1. A filled amount weighing apparatus including, in the following order along a carrying path (5): a carrying-in stage (6) for receiving an empty container (12), a pre-weighing stage (7) for weighing the empty container (12), a filling stage (8) for filling an object (34) to be filled and sent out of a filling device (14) into the weighed empty container (12), a post-weighing stage (9) for weighing the filled container (12), and a carrying-out stage (10) for sending the weighed and filled container (12) out to a next process, comprising
a carrying means (2) having a container housing portion (4) adapted such that, the empty container (12) is housed into the container housing portion (4) at the carrying-in stage (6),
the container housing portion (4) adapted to move along the carrying path (5) with the container (12) housed in the container housing portion (4),
the carrying-out stage (10) adapted such that the filled container (12) is taken out of the container housing portion (4),
the carrying means (2) being adapted to move intermittently so that the container housing portion (4) temporarily stops at the respective stages (6, 7, 8, 9, and 10),
**characterized by**
a cylinder body (19) made of electrically conductive material and being adapted to fit over the container (12), a nd
the filling amount weighing apparatus being adapted such that the container (12) is carried from the carrying-in stage (6) to the carrying-out stage (10) with the cylinder body (19) made of electrically conductive material fitted over the container (12).

2. A filled amount weighing apparatus according to claim 1, adapted such that the empty container (12) is housed into the container housing portion (4) at the carrying-in stage (6) with the cylinder body (19) fitted over the container (12) in advance and the filled container (12) is taken out of the cylinder body (19) after it is sent out of the carrying-out stage (10).

3. A filled amount weighing apparatus according to claim 2, wherein an insertion stage (48) for inserting the empty container (12) into the cylinder body (19) is provided in a vicinity of the carrying-in stage (6), a taking-out stage (49) for taking the filled container (12) out of the cylinder body (19) is provided in a vicinity of the carrying-out stage (10), a cylinder body retrieving path (50) is formed between the taking-out stage (49) and the insertion stage (48) being adapted such that the cylinder body (19) is circulated from the taking-out stage (49) to the insertion stage (48) through the cylinder body retrieving path (50).

4. A filled amount weighing apparatus according to claim 1, wherein the container housing portion (4) has the cylinder body (19) and is adapted such that the empty container (12) is inserted into the cylinder body (19) at the carrying-in stage (6), and
the filled container (12) is taken out of the cylinder body (19) at the carrying-out stage (10).

5. A filled amount weighing apparatus according to any one of claims 1 to 4, wherein the container housing portion (4) has pinching means (52), the container (12) housed in the container housing portion (4) is carried while pinched by the pinching means (52), and the pinching means (52) adapted to release its pinch on the container (12) at least at the pre-weighing stage (7) and the post-weighing stage (9).

6. A filled amount weighing apparatus according to any one of claims 1 to 3, wherein the container housing portion (4) has pinching means (52) adapted such that the cylinder body (19) housed in the container housing portion (4) is carried while pinched by the pinching means (52), and the pinching means (52) adapted such that it releases its pinch on the cylinder body (19) at least at the pre-weighing stage (7) and the post-weighing stage (9).

## Patentansprüche

1. Füllmengenwägevorrichtung, die entlang eines Transpartwegs (5) in folgender Reihenfolge aufweist: eine Zutransportstufe (6) zum Aufnehmen eines leeren Behälters (12), eine Vorwägestufe (7) zum Wägen des leeren Behälters (12), eine Füllstufe (8) zum Einfüllen eines eimufüllenden und aus einer Füllvorrichtung (14) auszugebenden Objekts (34) in den gewogenen leeren Behälter (12), eine Nachwägestufe (9) zum Wägen des gefüllten Behälters (12) und eine Abtransportstufe (10) zum Ausgeben des gewogenen und gefüllten Behälters (12) an einen nächsten Prozess, umfassend
ein Transportmittel (2) mit einem Behälteraufnahmeabschnitt (4), so eingerichtet, dass der leere Behälter (12) an der Zutransportstufe (6) in dem Behälteraufnahmeabschnitt (4) aufgenommen wird,
wobei der Behälteraufnahmeabschnitt (4) dazu eingerichtet ist, sich mit in dem Behälteraufnahmeabschnitt (4) aufgenommenem Behälter (12) entlang des Transportwegs (5) zu bewegen,
die Abtransportstufe (10) so eingerichtet ist, dass der gefüllte Behälter (12) aus dem Behälteraufnahmeabschnitt (4) entnommen wird,
wobei das Transportmittel (2) dazu eingerichtet ist, sich mit Unterbrechungen zu bewegen, so dass der Behälteraufnahmeabschnitt (4) an den jeweiligen Stufen (6, 7, 8, 9 und 10) zeitweise anhält, **gekennzeichnet durch** einen Zylinderkörper (19), der aus elektrisch leitfähigem Material hergestellt ist und dazu eingerichtet ist, über den Behälter (12) zu passen, und wobei die Füllmengenwägevorrichtung so eingerichtet ist, dass
der Behälter (12) mit über den Behälter (12) gepasstem lylinderkörper (19) aus elektrisch leitfähigem Material von der Zutransportstufe (6) zu der Abtransportstufe (10) transportiert wird.

2. Füllmengenwägevorrichtung gemäß Anspruch 1, die so eingerichtet ist, dass der leere Behälter (12) an der Zutransportstufe (6) mit zuvor über den Behälter (12) gepasstem Zylinderkörper (19) in dem Behälteraufnahmeabschnitt (4) aufgenommen wird und der gefüllte Behälter (12) aus dem Zylinderkörper (19) entnommen wird, nachdem eraus der Abtransportstufe (10) ausgegeben wird.

3. Füllmengenwägevorrichtung gemäß Anspruch 2, wobei eine Einführstufe (48) zum Einführen des leeren Behälters (12) in den Zylinderkörper (19) in einer Umgebung der Zutransportstufe (6) vorgesehen ist, eine Entnahmestufe (49) zum Entnehmen des gefüllten Behälters (12) aus dem Zylinderkörper (19) in einer Umgebung der Abtransportstufe (10) vorgesehen ist, ein Zylinderkörper-Rückführweg (50) zwischen der Entnahmestufe (49) und der Einführstufe (48) vorgesehen ist, der so eingerichtet ist, dass der Zylinderkörper (19) über den Zylinderkörper-Rückführweg (50) von der Entnahmestufe (49) zu der Einführstufe (48) zirkuliert wird.

4. Füllmengenwägevorrichtung gemäß Anspruch 1, wobei der Behälteraufnahmeabschnitt (4) den Zylinderkörper (19) aufweist und so eingerichtet ist, dass der leere Behälter (12) an der Zutransportstufe (6) in den Zylinderkörper (19) eingeführt wird und der gefüllte Behälter (12) an der Abtransportstufe (10) aus dem Zylinderkörper (19) entnommen wird.

5. Füllmengenwägevorrichtung gemäß einem der Ansprüche 1 bis 4, wobei der Behälteraufnahmeabschnitt (4) ein Klemmmittel (52) aufweist, der in dem Behälteraufnahmeabschnitt (4) aufgenommene Behälter (12) transportiert wird, während derselbe durch das Klemmittel (52) geklemmt ist, und das Klemmmittel (52) dazu eingerichtet ist, seine Klemmung des Behälters (12) zumindest an der Vorwägestufe (7) und der Nachwägestufe (9) zu lösen.

6. Füllmengenwägevorrichtung gemäß einem der Ansprüche 1 bis 3, wobei der Behälteraufnahmeahschnitt (4) ein Klemmmittel (52) aufweist, das so eingerichtet ist, dass der in dem Behälteraufnahmeabschnitt (4) aufgenommene Zylinderkörper (19) transportiert wird, während derselbe durch das Klemmmittel (52) geklemmt ist, und das Klemmmittel (52) so eingerichtet ist, dass dasselbe seine Klemmung des Zylinderkörpers (19) zumindest an der Vorwägestufe (7) und der Nachwägestufe (9) löst.

## Revendications

1. Appareil de pesée d'un volume chargé, comportant dans l'ordre suivant le long d'un chemin de transport (5): un niveau de transport à l'intérieur (6) en vue de la réception d'un conteneur vide (12), un niveau de pesée préliminaire (7) en vuo de la pesée du conteneur vide (12), un niveau de chargement (8) en vue du chargement d'un objet (34) à charger et à envoyer hors d'un dispositif de chargement (14) dans le conteneur vide pesé (12), un niveau de pesée ultérieur (9) en vue de la pesée du conteneur chargé (12), et un niveau de transport à l'extérieur (10) en vue de l'envoi du conteneur pesé et chargé (12) vers un processus suivant, comprenant:
un moyen de transport (2) possédant une partie de bâti de conteneur (4) adaptée de sorte que
le conteneur vide (12) est logé à l'intérieur de la partie de bâti de conteneur (4) sur le niveau de transport (6),
la partie de bâti de conteneur (4) adaptée à se déplacer le long du chemin de transport (5) avec le conteneur (12) logé dans la partie de bâti de conteneur (4),
le niveau de transport à l'extérieur (10) adapté de sorte que le conteneur chargé (12) est prélevé hors de la partie de bâti do conteneur (4),
le moyen de transport (2) étant adapté à se déplacer par intermittente de sorte que la partie de bâti de conteneur (4) s'arrête temporairement aux niveaux respectifs (6, 7, 8, 9, et 10),
**caractérisé par**
un corps cylindrique (19) fabriqué en matériau conducteur électriquement et étant adapté à s'insérer au-dessus du conteneur (12) et
l'appareil de pesée d'un volume de chargement étant adapté de sorte que le conteneur (12) est transporté du niveau de transport à l'intérieur (6) vers le niveau de transport à l'extérieur (10) avec le corps cylindrique (19) fabriqué en matériau conducteur électriquement et inséré au-dessus du conteneur (12)

2. Appareil de pesée d'un volume chargé selon la revendication 1, adapté de sorte que le conteneur vide (12) est logé à l'intérieur de la partie de bâti de conteneur (4) sur le niveau de transport à l'intérieur (6) avec le corps cylindrique (19) inséré au-dessus du conteneur (12) en avance et le conteneur chargé (12) est prélevé hors du corps cylindrique (19) après qu'il ait été envoyé hors du niveau de transport à l'extérieur (10).

3. Appareil de pesée d'un volume chargé selon la revendication 2, dans lequel un niveau d'insertion (48) en vue de l'insertion du conteneur vide (12) à l'intérieur du corps cylindrique (19) est fourni à une proximité du niveau de transport à l'intérieur (6), un niveau de prélèvement (49) en vue du prélèvement du conteneur chargé (12) hors du corps cylindrique (19) est fourni à une proximité du niveau de transport à l'extérieur (10), un chemin de récupération du corps cylindrique (50) est formé entre le niveau de prélèvement (49) et le niveau d'insertion (48) étant adapté de sorte que le corps cylindrique (19) circule du niveau de prélèvement (49) au niveau d'insertion (48) à travers le chemin de récupération du corps cylindrique (50).

4. Appareil de pesée d'un volume chargé selon la revendication 1, dans lequel la partie de bâti de conteneur (4) possède le corps cylindrique (19) et est adaptée de sorte que le conteneur vide (12) est inséré à l'intérieur du corps cylindrique (19) sur le niveau de transport à l'intérieur (6), et le conteneur chargé (12) est prélevé hors du corps cylindrique (19) sur le niveau de transport à l'extérieur (10).

5. Appareil de pesée d'un volume chargé selon une quelconque des revendications 1 à 4, dans lequel la partie de bâti de conteneur (4) possède des moyens de striction (52), le conteneur (12) logé à l'intérieur de la partie de bâti de conteneur (4) est transporté pendant la striction par les moyens de striction (52), et les moyens de
striction (52) adaptés à relâcher leur striction sur le conteneur (12) au moins au niveau de pesée préliminaire (7) et au niveau de pesée ultérieur (9).

6. Appareil de pesée d'un volume chargé selon une quelconque des revendications 1 à 3, dans lequel la partie de bâti de conteneur (4) possède des moyens de striction (52) adaptés de sorte que le corps cylindrique (19) logé à l'intérieur de la partie de bâti de conteneur (4) est transporté pendant la striction par les moyens de striction (52), et les moyens de striction (52) adaptés de sorte qu'ils relâchent leur striction sur le corps cylindrique (19) au moins au niveau de pesée préliminaire (7) et au niveau de pesée ultérieur (9).
